# FASCICULE DE BREVET EUROPEEN

(11) **EP 3 050 454 B1**
(45) Date de publication et mention de la délivrance du brevet: **17.11.2021**
(21) Numéro de dépôt: 15425006.2
(22) Date de dépôt: 02.02.2015
(51) Int. Cl.: A43B 19/00, A43B 5/04

(54) **Chausson pour chaussure de sport**
Innenschuh für Sportschuh
Sports-shoe liner

(43) Date de publication de la demande: 03.08.2016
(73) Titulaire: Rossignol Lange S.R.L., 31044 Montebelluna (IT)
(72) Inventeur: Zanatta, Luca, 31040 Volpago del Montello (TV) (IT); Basso, Adriana, 31044 Montebelluna (TV) (IT); Roux, Pascal, 38120 Saint-Égrève (FR)
(74) Mandataire: Novaimo

(56) Documents cités:
- EP-A1- 2 042 050
- EP-A1- 2 674 049
- DE-A1- 10 148 621
- FR-A1- 2 644 044
- FR-A1- 2 971 918
- None

## Description

La présente invention concerne un élément de confort formant au moins une partie d'une couche d'un chausson de chaussure de sport, ainsi qu'un chausson et une chaussure de sport en tant que tels intégrant un tel élément de confort. Cet élément de confort est particulièrement adapté pour former au moins une partie d'une couche de la paroi d'un chausson de chaussure de ski, notamment une partie de la doublure intérieure destinée à venir en contact avec le pied de l'utilisateur, ou plus généralement pour former tout ou partie de la paroi d'un élément chaussant pour sport de glisse. Elle concerne aussi un procédé de fabrication d'un tel élément de confort et d'un tel chausson.

Selon l'état de la technique, une chaussure de ski se compose d'une coque rigide entourant un chausson de confort dans lequel le skieur glisse son pied. Ce chausson amovible remplit des fonctions contradictoires. En effet, il doit assurer un bon maintien du pied pour obtenir une bonne transmission des efforts et un guidage efficace du ski, ce qui requiert une structure rigide, tout en assurant un confort au skieur, ce qui requiert une structure souple pour amoindrir les effets inconfortables de la coque rigide entourant le chausson. Le chausson doit également avantageusement produire une première sensation douillette et agréable au moment du chaussage car l'utilisateur y est très sensible.

Le document FR2460118 décrit un chausson pour chaussure de ski, dont la paroi comprend une couche intérieure remplie d'un élément en polyéthylène expansé, soumis à un procédé de thermo-compression. Ce chausson est ensuite chauffé à une certaine température pour laquelle la mousse de polyéthylène contenue dans la paroi a tendance à une ré-expansion, pour reprendre une partie du volume plus important qu'elle occupait initialement avant sa thermo-compression. Un acquéreur d'un tel chausson profite de cette propriété pour former le chausson à la forme de son pied : lorsque le chausson est porté à la température d'expansion de la mousse contenue dans sa paroi, il chausse le chausson dont la paroi vient naturellement épouser la forme de son pied lors de son expansion, qu'elle conserve par la suite après son refroidissement. Ce procédé permet à chacun de personnaliser la forme du chausson à l'anatomie de son pied et d'atteindre un confort optimal, parfois au dépend de la technicité du chausson.

Le document EP2042050 propose d'utiliser un élément de confort comprenant une mousse à cellules ouvertes et présentant au moins trois zones d'épaisseurs différentes et de densités différentes obtenues par compression, au niveau de la languette de la chaussure. De ce fait, plus l'épaisseur est faible, plus la densité est grande.

Un objet de l'invention consiste à proposer un chausson pour chaussure de sport qui améliore les solutions existantes.

Plus précisément, un premier objet de la présente invention consiste à proposer une solution qui améliore le confort de l'utilisateur d'une chaussure de sport tout en garantissant un bon maintien du pied, notamment compatible avec la pratique du ski.

Un second objet de la présente invention consiste à proposer une chaussure de sport présentant une esthétique attrayante.

A cet effet, l'invention repose sur un chaussson de confort pour chaussure de sport selon la revendication 1.

L'invention porte aussi sur un procédé de fabrication d'un chausson de confort de chaussure de sport selon la revendication 13.

L'invention est plus précisément définie par les revendications.

Ces objets, caractéristiques et avantages de la présente invention seront exposés en détail dans la description suivante d'un mode de réalisation particulier fait à titre non-limitatif en relation avec les figures jointes parmi lesquelles :
La figure 1 représente une vue de la face intérieure d'un élément de confort en configuration plane pour chausson de chaussure de sport selon un mode de réalisation de l'invention.
La figure 2 représente une vue de la seconde face (dite face extérieure) de l'élément de confort selon le mode de réalisation de l'invention.
La figure 3 représente une vue en coupe selon le plan médian XZ du chausson de chaussure de sport incluant l'élément de confort selon le mode de réalisation de l'invention.
La figure 4 représente la figure 1 sur laquelle sont mises en évidence des plans de coupe transverses de l'élément de confort, exploités sur les figures 5a à 5c.
Les figures 5a à 5c représentent les vues en coupe selon respectivement les plans A à C de de l'élément de confort en configuration plane selon le mode de réalisation de l'invention.
La figure 6 représente un tableau des épaisseurs et densités de différentes zones de l'élément de confort selon le mode de réalisation de l'invention.
La figure 7 représente l'évolution du produit de l'épaisseur par la densité en fonction de l'épaisseur des zones de l'élément de confort selon le mode de réalisation de l'invention.
La figure 8 représente l'évolution de la densité en fonction de l'épaisseur pour les zones de l'élément de confort selon le mode de réalisation de l'invention en comparaison avec l'évolution qui serait obtenue avec la loi de compression théorique qui sera explicitée par la suite.

L'invention va être illustrée dans le cas d'un chausson amovible pour chaussure de ski, en particulier pour le ski alpin ou de randonnée mais pourrait être implémenté aussi pour le surf ou le ski de fond, et également pour tout chausson de chaussure de sport, notamment destiné aux sports de glisse sur neige ou sur eau, et plus généralement pour tout élément chaussant d'une chaussure de sport, voire sur une chaussure de sport en tant que telle. Par ailleurs, le chausson pourrait dans toutes ses applications ne pas être amovible mais être lié à la tige externe de la chaussure de sport.

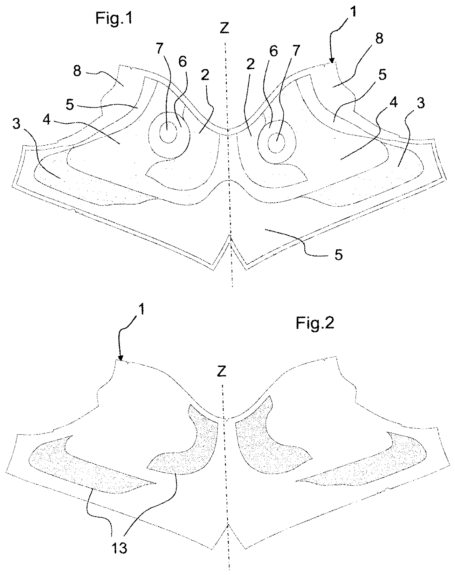

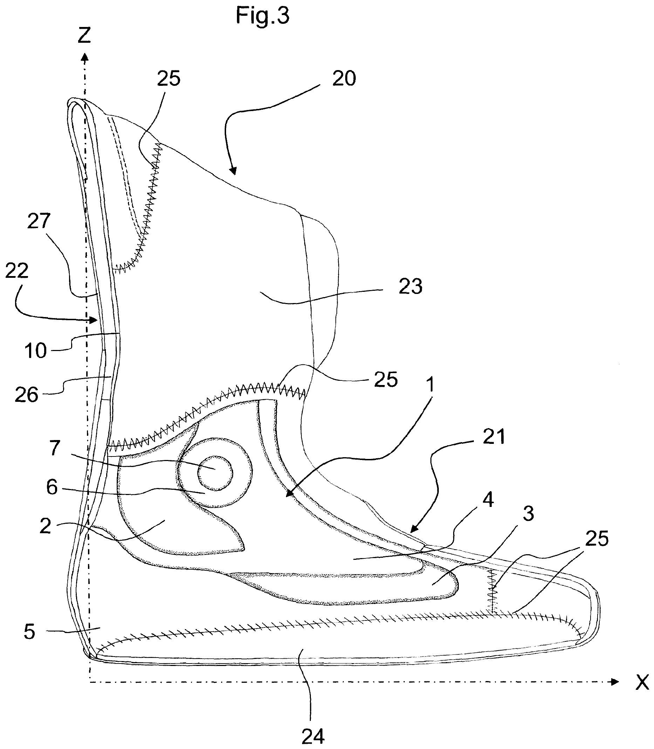

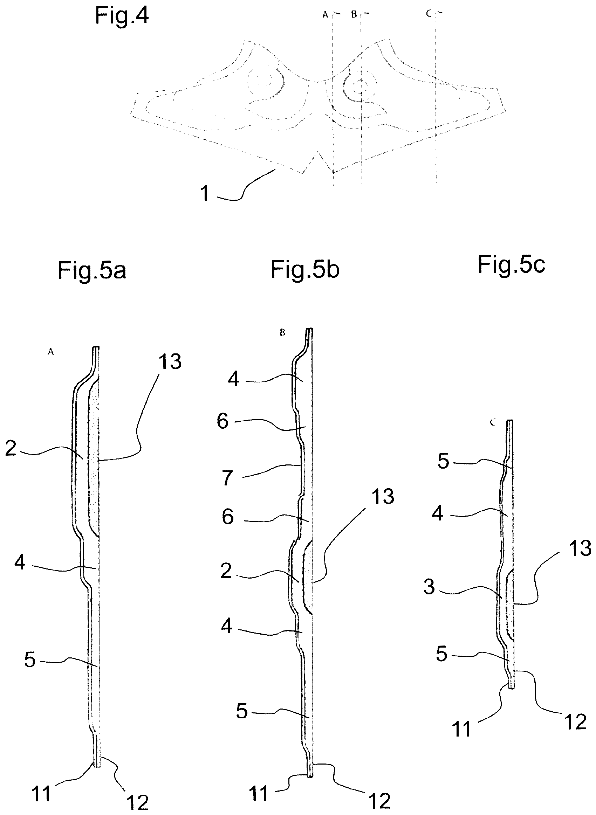

Selon le mode de réalisation de l'invention, le chausson comprend un élément de confort, agencé au niveau de la couche intérieure formant doublure interne du chausson destinée à être en contact avec le pied d'un utilisateur. Cette doublure interne 10, visible sur la figure 3, est fabriquée en partie à partir d'un élément de confort 1 de faible épaisseur, inférieure à 6 mm, dont les deux faces sont illustrées par les figures 1 et 2. Cet élément de confort 1 comprend une première face représentée en figure 1, dite face intérieure puisqu'elle est destinée à former la face intérieure du chausson, venant directement en contact avec le pied d'un utilisateur. Cette face intérieure comprend des reliefs, qui sont particulièrement visibles sur les vues en coupe des figures 5a à 5c. Le positionnement avantageux de ces reliefs sera détaillé par la suite. L'élément de confort 1 comprend des zones 2 à 8 d'épaisseurs variables, qui forment ces reliefs. La seconde face de la doublure, dite face extérieure, représentée en figure 2, est sensiblement plane, et intègre des renforts 13. L'élément de confort 1 est sensiblement symétrique dans ses contours extérieurs autour d'un axe central Z, qui forme un axe de pliage lors de la mise en forme de l'élément de confort 1. L'axe Z forme alors un axe vertical de l'élément de confort, comme cela apparaît sur la figure 3. Cependant, une asymétrie est créée dans le positionnement des renforts 13 par rapport à l'axe Z, pour s'adapter à l'asymétrie naturelle du pied.

La figure 3 illustre en effet un chausson 20 de confort pour chaussure de ski alpin, qui intègre un élément de confort 1 mis en forme de façon volumique pour s'adapter à la forme d'un pied. Cette figure 3 montre la moitié gauche (ou droite) d'un chausson selon l'invention montrant dans sa partie intérieure l'élément de confort 1, qui forme la partie inférieure de la doublure interne 10 de la paroi du chausson. On retrouve notamment les reliefs 2 à 8 mentionnés précédemment, dont le positionnement est avantageusement choisi pour optimiser le confort et la performance du chausson, comme cela sera détaillé par la suite.

L'élément de confort est fixé à d'autres composants pour former le chausson dans son ensemble, notamment une semelle 24, et des parties de paroi 23. Cette fixation peut être réalisée par des coutures 25, ou en variante par tout autre élément de fixation, comme un collage ou une soudure.

Ce chausson 20 peut présenter une forme conventionnelle, avec une partie basse 21 entourant complètement le pied, recouvrant notamment le cou de pied et remontant jusqu'au niveau de la cheville, puis une partie haute 22 plus ouverte, destinée à entourer le bas de jambe, comprenant deux rabats latéraux positionnés vers l'avant à proximité d'une languette frontale fixée à la partie basse au niveau du cou de pied.

La paroi du chausson 20 présente une structure au moins partiellement traditionnelle, formée par trois couches : une couche interne formant la doublure interne 10 destinée à être en contact du pied, intégrant l'élément de confort 1 selon l'invention, comme explicité ci-dessus, une couche externe 27 plus rigide, destinée à apporter de la tenue au chausson, ces deux couches 10, 27 délimitant un volume intérieur dans lequel un matériau de rembourrage sous forme de mousse est positionné, formant une troisième couche de rembourrage 26 intermédiaire.

En remarque, selon un mode de réalisation intéressant, ce matériau de rembourrage est thermoformable, par exemple une mousse thermoplastique à base d'EVA et/ou de polyéthylène. Ainsi, lorsqu'il est chauffé à sa température de déformation, autour de 80°C, de préférence entre 60 et 100°C, et une fois le pied inséré dans le chausson, le matériau de rembourrage thermoformable de la couche intermédiaire du chausson prend la forme du pied de l'utilisateur de manière stable et durable, notamment en se comprimant dans les zones proéminentes du pied. En variante, cette mousse peut ne pas être thermoformable.

La doublure interne 10 comprend l'élément de confort 1 selon le mode de réalisation dans sa partie inférieure depuis la semelle jusqu'à la zone des malléoles, et dans sa partie supérieure est formée d'au moins un tissu ou mousse d'épaisseur constante, formant les parties de paroi 23 mentionnées précédemment. La doublure interne 10 est tendue sur le matériau de rembourrage de la couche de rembourrage 26 intermédiaire et est de préférence suffisamment souple et/ou élastique pour garantir le confort du pied et accompagner la déformation de ladite couche de rembourrage. En variante, le chausson peut prendre toute autre architecture de l'état de la technique, mais intégrant un élément de confort selon l'invention.

L'élément de confort 1 est formé de plusieurs couches et/ou plusieurs matériaux selon le mode de réalisation, visibles sur les figures 5a à 5c, en particulier d'une première couche 11 et d'une deuxième couche 12. La couche intérieure 11 forme la première face de l'élément de confort destinée à venir en contact avec le pied d'un utilisateur et laisse apparaitre et permet de visualiser les différentes zones en relief. Elle est formée d'un tissu polyester d'épaisseur constante. Elle est de faible épaisseur, d'environ quelques millimètres, par exemple d'environ 1 à 2 mm, qui ne s'écrase pas ou difficilement lors d'une compression. Cette couche 11 est éventuellement extensible. Elle a pour fonction d'assurer le confort du chausson, puisqu'elle est directement en contact avec le pied. Elle a aussi pour fonction de garantir une esthétique attrayante du chausson, puisqu'elle est visible à l'intérieur du chausson. Cette couche intérieure 11 recouvre une seconde couche 12 de mousse, formant la deuxième couche de l'élément de confort 1. Ces deux couches 11 et 12 sont solidarisées l'une à l'autre sur toute leur surface commune. La mousse formant la couche 12 peut être par exemple en polyuréthane. Elle est thermoformable mais se thermoforme à des températures bien supérieures à celles que l'on peut rencontrer lors d'un thermoformage classique en magasin réalisé dans un but de personnalisation et d'adaptation de la chaussure de sport au pied de l'utilisateur, en particulier si le matériau de rembourrage de la couche de rembourrage 26 est lui thermoformable et personnalisable. Par exemple, la température de thermoformage de la couche de mousse 12 est comprise entre 140 et 200°C. Il est en effet souhaitable que les épaisseurs et les densités de l'élément de confort ne soient pas modifiées par l'utilisateur, le fabricant du chausson choisissant ces épaisseurs et densités afin de garantir le meilleur compromis entre confort et performance. Cette mousse 12 présente une épaisseur variable, qui forme ainsi les reliefs visibles sur la face intérieure de la doublure interne 10. Enfin, l'élément de confort intègre des renforts 13 au niveau de sa seconde face ou face extérieure, qui est plane. Ces renforts sont optionnels, et compriment localement la zone de la mousse 12 qui reçoit le renfort 13.

Selon le mode de réalisation de l'invention, il a été noté que la densité de la mousse résultant de la compression classique et théorique pour former des zones en relief, comme décrite dans le document EP2042050, n'est pas optimale. En effet, selon cette approche de l'état de la technique, lorsqu'une zone est comprimée, la densité de la mousse augmente tandis que l'épaisseur diminue. Il existe une loi physique qui permet de lier la densité d finale de la mousse avec l'épaisseur e finale de la mousse après compression, qui se modélise par la formule d = C x 1/e, où C est une constante appelée facteur de compression. Cette loi, que nous appellerons simplement loi de compression théorique est considérée comme induisant un résultat non satisfaisant dans son application dans l'état de la technique.

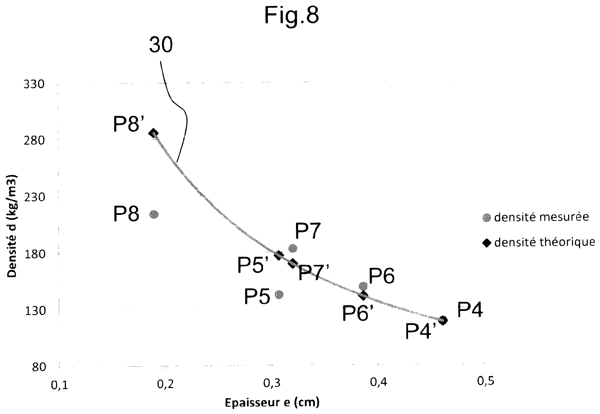

La figure 8 montre l'évolution de la densité en fonction de l'épaisseur pour cinq points P4 à P8 respectivement positionnés sur les zones 4 à 8 de l'élément de confort. Les densités mesurées sur l'élément de confort selon l'invention ne suivent pas la courbe 30 de la densité théorique correspondant à la loi de compression théorique rappelée ci-dessus. Cette courbe 30 passe par les points P4' à P8', correspondant respectivement à des points théoriques de densités théoriques pour respectivement les épaisseurs identiques aux points P4 à P8, mais qui seraient obtenues par une compression théorique et classique d'un élément de confort comprenant initialement la même épaisseur que l'élément de confort selon le mode de réalisation de l'invention. En remarque, cet effet qui s'applique en premier lieu sur la mousse thermoformable de la couche 12 de l'élément de confort, se répercute de même sur l'élément de confort, dont on peut mesurer l'épaisseur et la densité en considérant toutes ses couches s'il n'est pas monocouche.

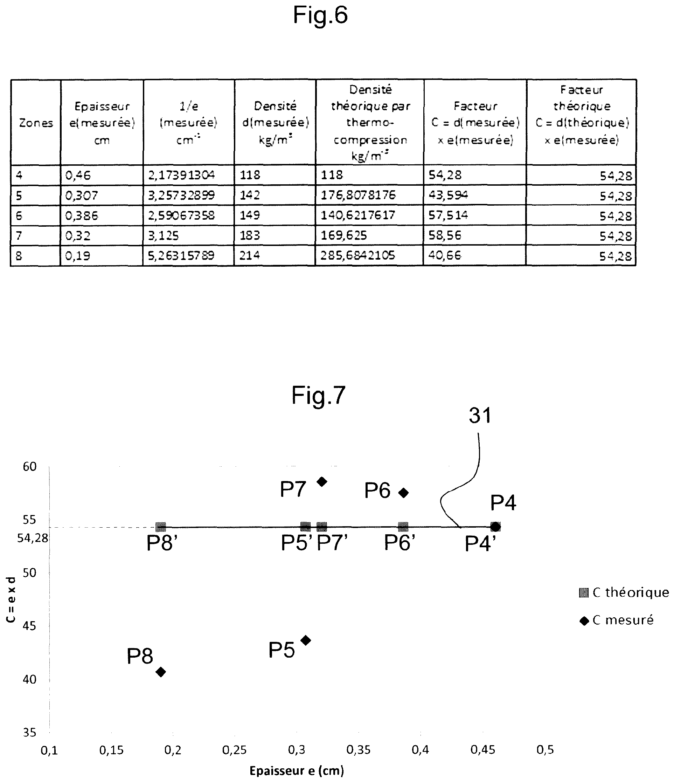

Selon l'invention, dans les zones 4 à 8 sans renfort 13, le mode de réalisation présente des zones en relief, avec des épaisseurs variées, ce qui présente des avantages qui seront détaillés ci-après. Toutefois, la densité de la mousse de l'élément de confort diffère, au moins sur certaines zones, de la loi de compression théorique. Notamment, sa densité n'augmente pas aussi significativement lorsque son épaisseur diminue que par application de la loi de compression théorique. En effet, dans le cas de l'invention, les produits d(mesurée) x e(mesurée) dans différentes zones ne sont pas sensiblement constants, comme illustré par la figure 7. En effet, cette figure 7 représente le produit de la densité par l'épaisseur en fonction de l'épaisseur pour cinq points P4 à P8 respectivement positionnés sur les zones 4 à 8 de l'élément de confort. Elle illustre de plus ce produit constant par une droite 31 horizontale, passant par les points P4' à P8', correspondant respectivement à des points théoriques de densités théoriques pour respectivement les épaisseurs identiques aux points P4 à P8, mais qui seraient obtenues par une compression théorique et classique d'un élément de confort comprenant initialement la même épaisseur que l'élément de confort de selon le mode de réalisation de l'invention. Il apparaît clairement sur la figure 7 que les points P4 à P8 ne sont pas alignés, donc que le produit densité par épaisseur varie. Sur ce mode de réalisation, cette variation est significative, allant de - 25% à + 8% par rapport à la valeur théorique, mais il est possible d'envisager d'autres modes de réalisation induisant des variations plus faibles, mais supérieures ou égales à 2%, voire une variation d'au moins plus ou moins 5%. D'autre part, il apparaît aussi que ce produit peut être supérieur à la valeur théorique illustrée par la courbe 31 (voir points P4, P6, P7), ou inférieur (voir points P5, P8).

Dans le cas illustré, la densité de l'élément de confort varie peu et sa variation est inférieure ou égale à plus ou moins 30% par rapport à la densité moyenne, pour une épaisseur variant selon un facteur trois entre la zone la plus épaisse et la zone la moins épaisse. Pour une telle variation d'épaisseur, la loi de compression théorique mentionnée précédemment induit facilement des variations de densité bien supérieures, notamment de 60% ou plus. En variante, l'épaisseur l'élément de confort 1 peut varier différemment, de préférence au moins du simple au double entre ses différentes zones. Ces informations sur la densité de la mousse de l'élément de confort seront encore précisées par la suite.

Dans le cadre de l'invention, il est possible de concevoir un élément de confort où toutes les zones sont d'épaisseurs différentes et de densité constante, ou même d'obtenir un élément de confort présentant des densités très variées correspondant à des épaisseurs diverses, le produit de l'épaisseur par la densité dans les zones n'étant pas constant.

Dans l'art antérieur utilisant la loi de compression théorique, lorsque l'on souhaite obtenir une mousse d'épaisseur variable, la densité initiale de la mousse non compressée initiale induit donc des densités précises, calculables selon la loi de compression théorique et souvent non satisfaisantes car généralement trop denses lorsque l'épaisseur devient faible.

L'élément de confort 1 comprend donc des zones 4 à 8 d'épaisseur et de densité différentes. Ces zones en relief permettent notamment un agencement avantageux de l'élément de confort dans les zones des malléoles (externe et/ou interne par rapport au pied) et dans la zone du talon.

De plus, par ajout de renforts 13 au niveau des zones 2 et 3 de l'élément de confort formé des couches 11 et 12, il est possible d'apporter de la rigidité supplémentaire dans ces zones, et donc d'obtenir une densité suffisamment grande dans une zone de forte épaisseur où la densité de la mousse 12 reste souvent faible. Ces renforts 13 permettent aussi un agencement avantageux dans les zones proches des métatarses (externe et/ou interne du pied) et/ou à l'arrière des malléoles.

Les renforts 13 sont réalisés dans un matériau similaire à celui composant la couche 12, voire la couche 11, de préférence en mousse ou tissu. Ils peuvent présenter des densités différentes par rapport aux couches 11 et 12. Ils peuvent également être en toute autre matière plastique, compressible ou non. Par ailleurs, les renforts 13 sont situés sur la face extérieure de l'élément de confort, mais peuvent également être situés sur sa face interne.

Ainsi, selon le mode de réalisation, une zone creuse 7, sensiblement en forme de disque, complétée par une autre zone creuse de transition 6, formant un anneau autour de la première zone creuse 7, sont prévues au niveau de l'emplacement des malléoles. Ces zones creuses 6, 7 permettent de libérer de l'espace pour ne pas heurter les malléoles, tout en restant suffisamment souples pour assurer un confort au contact des malléoles. En partie arrière de la malléole, une zone de maintien 2 de plus grande épaisseur est agencée pour le maintien du chausson au niveau de ladite malléole, tout en formant une butée évitant à la malléole de trop s'enfoncer dans les zones creuses 6, 7 susmentionnées. Cette zone de maintien 2 présente une forme en croissant de lune, pour s'étendre autour de la malléole sur sensiblement toute la moitié arrière de la périphérie autour de la malléole et permet d'éviter au pied de glisser vers l'arrière. Pour garantir sa fonction de maintien, cette zone de maintien 2 est plus rigide que la rigidité qui serait obtenue par la simple loi de compression théorique. Ainsi par exemple, cette zone 2 de maintien est plus dense que la zone intermédiaire 4, qui présente pourtant une plus faible épaisseur que cette zone de maintien 2. La zone intermédiaire 4 présente une épaisseur relativement élevée, comprise entre celle des zones creuses 6, 7 et de la zone de maintien 2. Elle forme ainsi une zone de transition permettant une variation progressive de l'épaisseur de l'élément de confort 10. Cette zone 4 est présente dans la zone du tendon d'Achille et permet de s'adapter à la courbure naturelle du pied qui existe au-dessus du talon, toujours dans un souci de calage du pied.

Cet élément de confort 1 comprend de plus une zone épaisse 3, composée du bicouche formé des couches 11 et 12 et d'un élément de renfort 13, d'épaisseur sensiblement égale à celle de la zone de maintien 2, et de densité aussi relativement importante, au niveau des métatarses. Elle est d'épaisseur importante et de densité suffisante pour permettre de garantir un bon contact du chausson avec les parties latérales avant du pied (au niveau des métatarses), ce qui est favorable à une bonne transmission des efforts exercés par le pied, utile lors de la pratique d'un sport de glisse comme le ski.

Enfin, l'élément de confort définit une zone 5 plus écrasée au niveau du talon, de plus faible épaisseur que les zones susmentionnées, ou sensiblement égale à celle des zones creuses 6, 7 de la malléole. Cette zone 5 définit un logement qui permet de caler le talon et d'empêcher ou de limiter le glissement du pied vers l'avant du chausson.

En remarque, l'élément de confort 1 comprend de plus une zone périphérique 8 encore plus comprimée, et de plus faible épaisseur, qui sert à sa liaison avec des parties complémentaires traditionnelles et non représentées, sauf partiellement sur la figure 3, pour relier cet élément de confort au niveau de ses bords avec les autres bords des couches formant la paroi du chausson, notamment par des coutures 25.

Les formes des reliefs décrites ci-dessus le sont à titre d'exemple non limitatif. Plus généralement, l'invention définit des reliefs pour permettre d'atteindre un compromis optimal entre le confort et la technicité du chausson, lui permettant de remplir la fonction technique de guidage d'un engin de glisse tout en assurant le confort du pied. Il faut notamment remarquer que l'invention définit des zones creuses d'épaisseur moindre dont la densité n'est pas trop importante, pour éviter de trop réduire le confort dans ces zones creuses. Inversement, elle définit des zones plus épaisses dont la densité n'est pas trop faible, pour éviter de trop réduire la rigidité et la technicité du chausson dans ces zones. Au final, elle propose donc une forme avec des reliefs dont la densité reste relativement homogène, et varie moins que si l'on formait ces mêmes reliefs à partir d'une simple compression d'une mousse homogène d'épaisseur constante (selon la loi de compression théorique). En variante, l'élément de confort peut présenter des reliefs différents de ceux décrits, de préférence comprenant au moins trois zones d'épaisseur différente.

En particulier, les densités sont choisies selon les besoins de maintien et de confort et le facteur C égal au produit de la densité par l'épaisseur n'est pas constant sur l'ensemble de l'élément de confort.

Le tableau de la figure 6 donne l'épaisseur et la densité choisies pour les différentes zones 4 à 8 de l'élément de confort selon le mode de réalisation de l'invention. La dernière colonne donne à titre d'exemple le facteur C constant qui serait obtenu par la loi de compression théorique à partir de la même mousse initiale, homogène et d'épaisseur constante, et en lui appliquant une simple thermocompression, en remplacement du procédé selon l'invention, qui va être décrit ci-après. La figure 8 illustre cette différence de répartition de la densité par rapport à cette loi de compression théorique, comme explicité précédemment. Les points P4 à P8 montrent les valeurs obtenues avec le mode de réalisation de l'invention, explicitées dans le tableau de la figure 6. On remarque par exemple que l'élément de confort 1 comprend des zones 6, 7 plus épaisses qu'une zone 5 et pourtant de plus forte densité, ce qui va à l'opposé de la loi de compression théorique. On remarque également pour la zone périphérique 8 que l'élément de confort peut présenter des zones d'épaisseurs faibles tout en évitant d'obtenir une densité trop élevée.

L'invention porte aussi sur le procédé de fabrication d'un élément de confort 1 d'un chausson ou d'une chaussure de sport.

Pour cela, une première étape consiste à partir d'un élément initial plat comprenant une mousse thermoformable homogène sur sa surface et d'épaisseur constante, compressible, destinée à former la seconde couche 12 en relief mentionnée précédemment. Pour obtenir les valeurs illustrées dans le tableau de la figure 6 de l'exemple de réalisation, une mousse de densité 60 kg/m3 environ et d'épaisseur comprise entre 6 mm et 2 cm peut être utilisée. Cet élément initial plat est associé à une couche intérieure 11 consistant en un tissu, comme mentionné précédemment en référence avec les figures 5a à 5c. En variante, pour fabriquer un élément de confort monocouche, cette couche intérieure 11 est omise. En variante, la seconde couche 12 peut être composée d'une superposition de couches de différentes mousses.

Une seconde étape du procédé consiste à couper une partie de la mousse, du côté de la face munie de la mousse 12, dans le cas du mode de réalisation de l'invention du côté de la face extérieure de l'élément initial. Cette coupe est réalisée de manière non homogène, pour former finalement des reliefs sur cette face. Elle peut être faite par exemple par usinage. Il peut s'agir de toute coupe dans l'épaisseur de la mousse. Plus généralement, elle consiste ainsi à travailler l'élément initial pour obtenir une mousse de densité constante et d'épaisseur variable, formant ainsi un élément intermédiaire à mousse d'épaisseur variable.

Une troisième étape du procédé comprend une étape de thermocompression dans un moule comprenant les reliefs souhaités, par chauffage et/ou par haute fréquence ou encore par ultrasons de l'élément intermédiaire issu de la seconde étape, à une température généralement comprise entre 140 et 200°C. Comme cette compression est réalisée à partir d'un élément d'épaisseur variable, l'élément final résultant formant l'élément de confort comprend une épaisseur et une densité qui diffèrent de la loi de compression théorique, qui seraient obtenues par simple compression de l'élément initial, sans la mise en œuvre de la seconde étape.

Naturellement, le choix des zones et de l'épaisseur des coupes effectuées lors de la seconde étape permet au final de réduire la densité de la mousse au niveau desdites zones. Le choix de l'épaisseur de coupe permet ainsi de fixer précisément la densité finale qui sera obtenue, en fonction de la connaissance de la future compression qui sera appliquée. L'homme du métier calculera donc le positionnement et l'épaisseur de ces coupes en fonction du résultat souhaité.

En variante, le procédé de fabrication peut comprendre une étape supplémentaire entre les seconde et troisième étape, de collage d'un ou plusieurs renforts 13 sur la face extérieure, voire interne, de l'élément intermédiaire. L'ajout de renforts 13 permet d'augmenter les possibilités de détermination d'une certaine densité en un endroit particulier de l'élément de confort résultant. Notamment, elle permet d'augmenter la densité globale et la rigidité de l'élément de confort ou de la doublure dans certaines zones relativement épaisses, peu comprimées et potentiellement peu denses. Dans l'exemple de réalisation illustré, des renforts 13 sont ainsi utilisés au niveau des zones 2, 3 de l'élément de confort.

Ensuite, le procédé de fabrication comprend une étape de mise en forme volumique de l'élément de confort et une étape de liaison pour former la doublure interne 10 et le chausson 20. Cette doublure interne est en général cousue à plat à d'autres parties de paroi du chausson, puis l'ensemble du chausson est mis en forme.

En remarque, un seul élément de confort 1 a été illustré dans les exemples précédents. Plusieurs éléments de confort selon l'invention, comprenant une ou plusieurs couches de mousse formées de matériaux et/ou densités initiales différents, peuvent être superposés ou juxtaposés au sein de la paroi d'une partie de chaussure. L'élément de confort 1 utilisé présente deux couches (ou trois avec les renforts 13). En variante, il pourrait être monocouche, ou comprendre plus de deux ou trois couches de mousses compressibles de densité différentes. Il est avantageux, car simple à fabriquer tout en atteignant un résultat satisfaisant, permet de partir d'un élément initial comprenant une seule couche de mousse homogène recouverte ou non d'un tissu mince d'habillage non compressible, et donc de considérer un élément de confort incluant une seule couche de mousse, c'est-à-dire comprenant la même mousse thermoformable sur sensiblement toute sa surface, mais avec des épaisseurs et/ou des densités différentes. Il présente aussi une forme particulière qui lui permet de couvrir le pied du talon jusqu'à l'avant du pied, et du talon jusqu'au bas de jambe. En variante, il pourrait couvrir une surface différente autour du pied et en particulier recouvrir seulement une zone restreinte du pied, voire même constituer la totalité de la doublure. Avantageusement, il correspond à une surface importante de la chaussure de sport. De plus, un tel élément de confort selon l'invention reste compatible avec une utilisation combinée avec les éléments de confort conventionnels de l'état de la technique.

Dans l'exemple précédemment décrit, l'élément de confort selon l'invention a été avantageusement positionné sur la surface intérieure du chausson. Ce positionnement permet à la chaussure de présenter une paroi intérieure confortable, avec une esthétique attrayante, et qui assure au pied des bonnes propriétés de calage en bloquant le déplacement de celui-ci vers l'avant et l'arrière et également latéralement, les reliefs créés étant directement en contact avec le pied. Toutefois, l'élément de confort pourrait être positionné à un autre niveau dans l'épaisseur de la chaussure tout en permettant de répondre efficacement aux exigences de confort et de rigidité. Par exemple, il peut être intégré au sein de l'épaisseur de la paroi du chausson comme une couche de rembourrage. Dans une telle implémentation, il pourrait comprendre une épaisseur beaucoup plus importante, par exemple entre un et trois centimètres. Selon encore une autre variante, il pourrait être suffisamment épais pour former l'intégralité de l'épaisseur de la paroi du chausson en au moins une certaine zone, voire même former l'intégralité du chausson.

Les reliefs ont été créés sur une seule face de l'élément de confort, en particulier sur la face intérieure. En variante, des reliefs pourraient être créés sur les deux faces de l'élément de confort, lors de la troisième étape du procédé, par utilisation d'un moule adapté.

Un tel élément de confort est particulièrement adapté aux chaussons de chaussure de sport qui comprennent des tiges extérieures rigides, comme les chaussures de ski, pour lesquelles l'atteinte du confort représente un problème technique particulièrement délicat à résoudre. Toutefois, il peut aussi avantageusement être utilisé dans d'autres chaussures de sport.

Le chausson de confort selon l'invention intègre une mousse thermoformable destinée à être thermoformée en usine pour créer des zones de relief spécifiques où les densités et les épaisseurs de chaque zone sont choisies pour optimiser le confort et le maintien du pied de l'utilisateur.

Selon une variante de réalisation particulière, les reliefs de l'élément de confort pourraient être fortement réduits, voire totalement supprimés, et l'élément de confort comprendrait alors une épaisseur constante, ou sensiblement constante, mais avec des zones de densité différente.

Finalement, l'invention atteint bien les objets recherchés et présente les notamment avantages suivants :
- Elle permet d'atteindre un élément de confort formant un compromis idéal entre la fonction de maintien et de calage du pied au sein de la chaussure, la fonction de guidage du ski lors de la pratique du ski et la fonction de confort pour le pied de l'utilisateur, par le choix des épaisseurs et des densités souhaitées sur différentes zones du chausson ;
- Elle permet d'obtenir cet élément de confort de manière simple et peu coûteuse, à partir d'un simple élément initial monocouche ou multicouche d'épaisseur constante et de densité constante, homogène sur toute sa surface.

## Revendications

1. Chausson de confort (20) pour chaussure de sport, **caractérisé en ce qu'**il comprend une paroi comprenant un élément de confort (1) comprenant au moins une mousse thermoformable présentant au moins deux zones d'épaisseur différente et formant au moins une face de l'élément de confort avec des zones (4 à 8) en relief, apte à constituer au moins une partie d'une couche de la paroi d'un chausson de chaussure de sport, **caractérisé en ce que** le produit de l'épaisseur par la densité de l'élément de confort (1) diffère entre ces au moins deux zones d'épaisseurs différentes, et **en ce que** l'élément de confort (1) forme tout ou partie de la doublure interne (10) du chausson de confort (20), la face en relief étant destinée à venir en contact avec le pied d'un utilisateur, ou **en ce que** l'élément de confort (1) forme tout ou partie d'une couche de rembourrage (26) de la paroi du chausson de confort (20), comprise entre une doublure interne (10) et une couche externe (27).

2. Chausson de confort (20) selon la revendication précédente, **caractérisé en ce que** l'élément de confort comprend au moins deux zones d'épaisseurs différentes pour lesquelles le produit de l'épaisseur par la densité de la mousse thermoformable diffère de plus ou moins 5% au moins.

3. Chausson de confort (20) selon l'une des revendications précédentes, **caractérisé en ce que** l'élément de confort comprend au moins une zone (6, 7) plus épaisse qu'une autre zone (5) et de plus forte densité.

4. Chausson de confort (20) selon l'une des revendications précédentes, **caractérisée en ce que** l'élément de confort comprend une face intérieure présentant des reliefs et une seconde face plane.

5. Chausson de confort (20) selon l'une des revendications précédentes, **caractérisé en ce que** l'élément de confort comprend une épaisseur variant d'au moins du simple au double entre ses différentes zones et/ou **en ce qu'**il comprend une densité variant au maximum de 30% par rapport à la densité moyenne.

6. Chausson de confort (20) selon l'une des revendications précédentes, **caractérisé en ce que** l'élément de confort comprend une mousse thermoformable constituée elle-même de plusieurs parties superposées de mousses thermoformables.

7. Chausson de confort (20) selon l'une des revendications précédentes, **caractérisé en ce que** l'élément de confort comprend au moins un renfort (13) au niveau d'une face plane de l'élément de confort ou au niveau d'une face qui comprend des reliefs.

8. Chausson de confort (20) selon l'une des revendications précédentes, **caractérisé en ce que** l'élément de confort comprend :
- au moins une zone creuse (6, 7) destinée à venir au niveau de la malléole d'un utilisateur, ou
- au moins une zone creuse (6, 7) destinée à venir au niveau de la malléole d'un utilisateur et au moins une zone de plus grande épaisseur (2) destinée à entourer une partie de la circonférence arrière de la malléole.

9. Chausson de confort (20) selon l'une des revendications précédentes, **caractérisé en ce que** l'élément de confort comprend :
- une zone (3) plus épaisse que des zones voisines destinée à venir en contact avec la partie métatarse du pied d'un utilisateur ; et/ou
- une zone (5) de plus faible épaisseur que des zones voisines destinée à venir au niveau du talon d'un utilisateur.

10. Chausson de confort (20) selon l'une des revendications précédentes, **caractérisé en ce que** l'élément de confort comprend une zone de plus grande épaisseur (2) destinée à entourer une partie de la circonférence arrière de la malléole et/ou une zone (3) plus épaisse que des zones voisines destinée à venir en contact avec la partie métatarse du pied d'un utilisateur, ce ou ces zone(s) plus épaisse(s) comprenant une couche avec renfort (13).

11. Chausson de confort (20) selon l'une des revendications précédentes, **caractérisé en ce que** l'élément de confort comprend une couche (11) en tissu extensible d'épaisseur constante épousant les reliefs de la mousse thermoformable de l'élément de confort (1), destinée à venir au niveau de la surface intérieure d'un chausson.

12. Chaussure de sport comprenant une coque externe, **caractérisée en ce qu'**elle comprend un chausson de confort, amovible ou non, selon l'une des revendications précédentes.

13. Procédé de fabrication d'un chausson de confort (20) de chaussure de sport selon l'une des revendications 1 à 11, **caractérisé en ce qu'**il comprend les étapes suivantes :
- couper dans son épaisseur une partie d'une mousse thermoformable initialement d'épaisseur constante pour obtenir un élément intermédiaire d'épaisseurs variables ;
- positionner l'élément intermédiaire d'épaisseurs variables dans un moule ; et
- effectuer une étape de thermo-compression de l'élément intermédiaire d'épaisseurs variables.

14. Procédé de fabrication d'un chausson de confort (20) selon la revendication précédente, **caractérisé en ce qu'**il comprend une étape intermédiaire consistant à positionner au moins un renfort (13) sur une face de l'élément intermédiaire d'épaisseurs variables avant l'étape de thermo-compression.

## Patentansprüche

1. Sportschuh-Komfortinnenschuh (20), **dadurch gekennzeichnet, dass** er eine Wand umfasst, die ein Komfortelement (1) umfasst, das mindestens einen thermoformbaren Schaumstoff umfasst, der mindestens zwei Bereiche unterschiedlicher Dicke aufweist und mindestens eine Fläche des Komfortelements mit erhabenen Bereichen (4 bis 8) bildet, die mindestens einen Teil einer Schicht der Wand eines Sportschuh-Komfortinnenschuhs darstellen kann, **dadurch gekennzeichnet, dass** das Produkt der Dicke mal der Dichte des Komfortelements (1) zwischen diesen mindestens zwei Bereichen unterschiedlicher Dicke verschieden ist und dass das Komfortelement (1) das gesamte oder einen Teil des Innenfutters (10) des Komfortinnenschuhs (20) bildet, wobei die erhabene Fläche dazu bestimmt ist, mit dem Fuß eines Benutzers in Kontakt zu kommen, oder dass das Komfortelement (1) die gesamte oder einen Teil der Auspolsterungsschicht (26) der Wand des Komfortinnenschuhs (20) zwischen einem Innenfutter (10) und einer Außenschicht (27) bildet.

2. Komfortinnenschuh (20) nach dem vorhergehenden Anspruch, **dadurch gekennzeichnet, dass** das Komfortelement mindestens zwei Bereiche unterschiedlicher Dicke umfasst, bei denen das Produkt der Dicke mal der Dichte des thermoformbaren Schaumstoffs um mindestens mehr oder weniger 5% verschieden ist.

3. Komfortinnenschuh (20) nach einem der vorhergehenden Ansprüche, **dadurch gekennzeichnet, dass** das Komfortelement mindestens einen Bereich (6, 7) umfasst, der dicker als ein anderer Bereich (5) ist und eine höhere Dichte hat.

4. Komfortinnenschuh (20) nach einem der vorhergehenden Ansprüche, **dadurch gekennzeichnet, dass** das Komfortelement eine Innenfläche mit Erhebungen und eine zweite, ebene Fläche umfasst.

5. Komfortinnenschuh (20) nach einem der vorhergehenden Ansprüche, **dadurch gekennzeichnet, dass** das Komfortelement eine Dicke umfasst, die zwischen seinen verschiedenen Bereichen mindestens von einfach zu zweifach variiert und/oder dass es eine Dichte umfasst, die maximal um 30% gegenüber der mittleren Dichte variiert.

6. Komfortinnenschuh (20) nach einem der vorhergehenden Ansprüche, **dadurch gekennzeichnet, dass** das Komfortelement einen thermoformbaren Schaumstoff umfasst, der seinerseits aus mehreren übereinanderliegenden thermoformbaren Schaumstoffteilen besteht.

7. Komfortinnenschuh (20) nach einem der vorhergehenden Ansprüche, **dadurch gekennzeichnet, dass** das Komfortelement mindestens eine Verstärkung (13) auf Höhe einer ebenen Fläche des Komfortelements oder auf Höhe einer Erhebungen umfassenden Fläche umfasst.

8. Komfortinnenschuh (20) nach einem der vorhergehenden Ansprüche, **dadurch gekennzeichnet, dass** das Komfortelement Folgendes umfasst:
- mindestens einen hohlen Bereich (6, 7), der dazu bestimmt ist, auf der Höhe des Knöchels eines Benutzers zu sitzen, oder
- mindestens einen hohlen Bereich (6, 7), der dazu bestimmt ist, auf der Höhe des Knöchels eines Benutzers zu sitzen, und mindestens einen Bereich (2) größerer Dicke, der dazu bestimmt ist, einen Teil des hinteren Umfangs des Knöchels zu umgeben.

9. Komfortinnenschuh (20) nach einem der vorhergehenden Ansprüche, **dadurch gekennzeichnet, dass** das Komfortelement Folgendes umfasst:
- einen Bereich (3), der dicker als benachbarte Bereiche und dazu bestimmt ist, mit dem Mittelfußknochenteil des Fußes eines Benutzers in Kontakt zu kommen, und/oder
- einen Bereich (5), der weniger dick als benachbarte Bereiche und dazu bestimmt ist, auf der Höhe der Ferse eines Benutzers zu sitzen.

10. Komfortinnenschuh (20) nach einem der vorhergehenden Ansprüche, **dadurch gekennzeichnet, dass** das Komfortelement einen Bereich (2) größerer Dicke umfasst, der dazu bestimmt ist, einen Teil des hinteren Umfangs des Knöchels zu umgeben, und/oder einen Bereich (3), der dicker als benachbarte Bereiche und dazu bestimmt ist, mit dem Mittelfußknochenteil des Fußes eines Benutzers in Kontakt zu kommen, wobei dieser oder diese dickere(n) Bereich(e) eine Schicht mit Verstärkung (13) umfassen.

11. Komfortinnenschuh (20) nach einem der vorhergehenden Ansprüche, **dadurch gekennzeichnet, dass** das Komfortelement eine Schicht (11) aus Stretch-Gewebe mit konstanter Dicke umfasst, die sich an die Erhebungen des thermoformbaren Schaumstoffs des Komfortelements (1) anschmiegt und dazu bestimmt ist, sich an die Innenfläche eines Innenschuhs anzulegen.

12. Sportschuh, umfassend eine Außenschale, **dadurch gekennzeichnet, dass** er einen gegebenenfalls entfernbaren Komfortinnenschuh nach einem der vorhergehenden Ansprüche umfasst.

13. Verfahren zur Herstellung eines Sportschuh-Komfortinnenschuhs (20) nach einem der Ansprüche 1 bis 11, **dadurch gekennzeichnet, dass** es die folgenden Schritte umfasst:
- Schneiden eines Teils eines thermoformbaren Schaumstoffs, der anfangs eine konstante Dicke aufweist, in seiner Dicke, um ein Zwischenelement mit variablen Dicken zu erhalten,
- Positionieren des Zwischenelements mit variablen Dicken in eine Form und
- Durchführen eines Schritts der Thermokomprimierung des Zwischenelements mit variablen Dicken.

14. Verfahren zur Herstellung eines Sportschuh-Komfortinnenschuhs (20) nach dem vorhergehenden Anspruch, **dadurch gekennzeichnet, dass** es einen Zwischenschritt umfasst, der daraus besteht, vor dem Thermokomprimierungsschritt mindestens eine Verstärkung (13) auf eine Fläche des Zwischenelements mit variablen Dicken zu positionieren.

## Claims

1. Comfort innerboot (20) for sports shoe, **characterized in that** it comprises a wall comprising a comfort element (1), comprising at least one thermoformable foam having at least two zones of different thickness and forming at least one face of the comfort element with zones (4 to 8) in relief, which is able to form at least part of a layer of the wall of a sports shoe innerboot, **characterized in that** the product of the thickness times the density of the comfort element (1) differs between these at least two zones of different thickness, and **in that** the comfort element (1) forms all or part of the internal lining (10) of the innerboot (20), the face in relief being intended to come into contact with the foot of a user, or **in that** the comfort element (1) forms all or part of a layer of padding (26) of the wall of the innerboot (20), comprised between an internal lining (10) and an external layer (27).

2. Comfort innerboot (20) according to the preceding claim, **characterized in that** the comfort element comprises at least two zones of different thickness for which the product of the thickness times the density of the thermoformable foam differs by more or less 5% at least.

3. Comfort innerboot (20) according to one of the preceding claims, **characterized in that** the comfort element comprises at least one zone (6, 7) that is thicker than another zone (5) and of greater density.

4. Comfort innerboot (20) according to one of the preceding claims, **characterized in that** the comfort element comprises an interior face exhibiting reliefs and a second face that is planar.

5. Comfort innerboot (20) according to one of the preceding claims, **characterized in that** the comfort element comprises a thickness that varies from at least single to double between its various zones and/or **in that** it comprises a density varying at most by 30% with respect to the mean density.

6. Comfort innerboot (20) according to one of the preceding claims, **characterized in that** the comfort element comprises a thermoformable foam itself made up of several superposed parts of thermoform moulding foams.

7. Comfort innerboot (20) according to one of the preceding claims, **characterized in that** the comfort element comprises at least one reinforcement element (13) at a planar face of the comfort element or at a face which comprises reliefs.

8. Comfort innerboot (20) according to one of the preceding claims, **characterized in that** the comfort element comprises:
- at least one recessed zone (6, 7) intended to sit at user malleolus level, or
- at least one recessed zone (6, 7) intended to sit at user malleolus level and at least one zone of greater thickness (2) intended to surround part of the rear circumference of the malleolus.

9. Comfort innerboot (20) according to one of the preceding claims, **characterized in that** the comfort element comprises:
- a zone (3) that is thicker than adjacent zones and intended to come into contact with the metatarsal part of the foot of a user; and/or
- a zone (5) of lesser thickness than adjacent zones and intended to sit at user heel level.

10. Comfort innerboot (20) according to one of the preceding claims, **characterized in that** the comfort element comprises a zone of greater thickness (2) intended to surround part of the rear circumference of the malleolus and/or a zone (3) thicker than adjacent zones and intended to come into contact with the metatarsal part of the foot of a user, this or these thicker zone(s) comprising a layer with reinforcement element (13).

11. Comfort innerboot (20) according to one of the preceding claims, **characterized in that** the comfort element comprises a layer (11) of stretch fabric of constant thickness conforming to the reliefs of the thermoformable foam of the comfort element (1) and intended to lie on the interior surface of an innerboot.

12. Sports shoe comprising an external shell, **characterized in that** it comprises a removable or non-removable comfort innerboot according to one of the preceding claims.

13. Method of manufacturing a comfort innerboot (20) for a sports shoe innerboot according to one of Claims 1 to 11, **characterized in that** it comprises the following steps:
- cutting in its thickness part of a thermoformable foam initially of constant thickness so as to obtain an intermediate element of variable thicknesses;
- positioning the intermediate element of variable thicknesses in a mould; and
- performing a thermocompression step on the intermediate element of variable thicknesses.

14. Method of manufacturing a comfort innerboot (20) according to the preceding claim, **characterized in that** it comprises an intermediate step involving positioning at least one reinforcement element (13) on a face of the intermediate element of variable thicknesses prior to the thermocompression step.
